# EUROPÄISCHE PATENTSCHRIFT

(11) **EP 3 044 369 B1**
(45) Veröffentlichungstag und Bekanntmachung des Hinweises auf die Patenterteilung: **28.06.2017**
(21) Anmeldenummer: 14781041.0
(22) Anmeldetag: 13.08.2014
(51) Int. Cl.: B65D 30/08, D21H 21/18, D21H 27/10, B65D 65/46, D21H 21/24, E04C 5/07

(54) **WASSERLÖSLICHES, UNGEBLEICHTES SACKPAPIER SOWIE PAPIERSACK**
WATER-SOLUBLE UNBLEACHED BAG PAPER, AND PAPER BAG
PAPIER POUR SACS NON BLANCHI, SOLUBLE DANS L'EAU AINSI QUE SAC EN PAPIER

(30) Priorität: 11.09.2013 AT 7062013
(43) Veröffentlichungstag der Anmeldung: 20.07.2016
(73) Patentinhaber: Mondi AG, 1030 Wien (AT)
(72) Erfinder: RÜF, Walter, A-9400 Wolfsberg (AT); KRASSER, Regina, A-9020 Klagenfurt (AT)
(74) Vertreter: Cunow, Gerda
(86) Internationale Anmeldenummer: PCT/AT2014/000155
(87) Internationale Veröffentlichungsnummer: WO 2015/035434

(56) Entgegenhaltungen:
- EP-A1- 2 399 836
- WO-A1-93/04120
- DE-A1- 19 814 373

## Beschreibung

Die vorliegende Erfindung bezieht sich auf ein wasserlösliches, ungebleichtes Sackpapier bestehend aus Lignine enthaltenden Zellulosefasern als Hauptbestandteil sowie einem oder mehreren Hilfsstoff(en) sowie einen Papiersack bestehend aus wasserlöslichem, ungebleichtem Sackpapier.

Sackpapier zur Herstellung von Papiersäcken für unterschiedlichste Inhaltsstoffe weist üblicherweise hohe Anforderungen an die mechanischen Zugeigenschaften des Papiers sowohl in Maschinen- und Querrichtung auf, um ein unbeabsichtigtes Reißen des Papiers, sei es beim Befüllen, Stapeln, Lagern oder dem Transport zu vermeiden und überdies soll es neben den guten Zugeigenschaften eine hohe Porosität und ausreichende Dehnungsfähigkeit sowohl in Längs- und Querrichtung aufweisen. Porosität ist wichtig, um beispielsweise während des Befüllens des Sacks, welches üblicherweise durch schnelles Einbringen mittels Maschinen geschieht, einen Druckstau im Inneren des Sacks zu vermeiden und somit ein Reißen des Sacks aufgrund einer "Druckwelle" zu vermeiden und überdies sicherzustellen, dass die Staubbelastung beim Befüllen von pulverigen Materialien, wie Zement oder dgl. möglichst gering gehalten wird.

Ein derartiges Sackpapier ist seit längerer Zeit bekannt und wird in den unterschiedlichsten Qualitäten für die unterschiedlichsten Einsatzzwecke hergestellt. Neben den oben genannten Eigenschaften des Sackpapiers existiert Sackpapier sowohl in gebleichter als auch ungebleichter Form, wobei gebleichtes Sackpapier im Vergleich zu ungebleichtem Sackpapier einen bedeutend geringeren Ligningehalt aufweist, was derartige Sackpapiere für Recyclingzwecke, insbesondere beispielsweise ein Auflösen in Wasser bzw. Wasser mit Zuschlagsstoffen unter Anwendung von Scherkräften gut geeignet macht. Ungebleichte Sackpapiere, welche einen hohen Prozentsatz an Lignin aufweisen, sind aufgrund der Tatsache, dass Lignin ein natürlich vorkommendes Hydrophobierungsmittel darstellt, üblicherweise nicht oder kaum wasserlöslich und stellen daher insbesondere ein relativ großes Problem bei der Entsorgung derselben dar. Entsorgen bzw. Recyclen durch Auflösen von derartigen Papieren ist gegenwärtig wegen der geringen Auflösungseigenschaften nicht möglich und ein Einbringen von derartigen Säcken in beispielsweise eine Müllverbrennung ist mit Problemen dahingehend behaftet, dass beispielsweise im Falle von Zementsäcken verbleibende Restmengen an Rohmaterial bzw. Füllmaterial in den Säcken im Laufe der Zeit eine Aufkonzentrierung bzw. Erhöhung von Zement bzw. gebranntem Kalk oder dgl. in Verbrennungsöfen bewirken, welche wiederum ein Problem der Beseitigung bzw. Verlegung von wichtigen Elementen der Öfen mit sich bringen können.

Wasserlösliche Papiere zeigen demgegenüber derartige Probleme nicht und können entsprechend unmittelbar entsorgt werden. Wasserlösliche Papiere, insbesondere Sackpapiere sind gekennzeichnet durch eine vollständige Auflösbarkeit des Papier nach der Behandlung entsprechend der Norm ISO 5263 "Pulps - Laboratory wet disintegration" sowie der Eindringgeschwindigkeit von Wasser in das Papier, welche durch einen K-Wert, der > 5000 sein muss, bestimmt wird. Der K-Wert wird hierbei mittels eines Emco-Penetrationstestgeräts DPM 27 gemessen. Die Messung des K-Werts erfolgt hierbei bei Raumtemperatur von 25 °C ± 2 °C mit reinem kaltem Wasser (Trinkwasserqualität), welches eine Temperatur zwischen 15 °C und 20 °C aufweist und keinerlei Zusätze enthält.

Die vorliegende Erfindung zielt nun darauf ab, ein wasserlösliches, ungebleichtes Sackpapier zur Verfügung zu stellen, welches sowohl entsprechend ISO 5263 vollständig in Wasser auflösbar ist und überdies eine zu gebleichtem Sackpapier vergleichbare Eindringgeschwindigkeit von Wasser in das Papier aufweist, ohne dass die Zellulosefasern vor ihrem Einsatz einem Bleichungsprozess unterworfen werden müssen.

Zur Lösung dieser Aufgabe ist das erfindungsgemäße wasserlösliche, ungebleichte Sackpapier im Wesentlichen dadurch gekennzeichnet, dass als Hilfsstoff wenigstens ein Tensid enthalten ist und dass als Hilfsstoff wenigstens ein Tensid enthalten ist, dass die Zellulosefasern als oxidativ behandelte, ungebleichte Weichholzfasern eingesetzt sind, und dass das Sackpapier eine relative Nassfestigkeit nach einer Wässerungszeit von 5 min. von unter 6 % aufweist. Nach Zusetzen eines Tensids gelingt es, die Oberflächenspannung des so hergestellten Sackpapiers so weit herabzusetzen, dass die Wirkung des Lignins als Hydrophobierungsmittel kompensiert wird, um das Papier insoweit wasserlöslich zu machen, dass es innerhalb von wenigen Minuten, vorzugsweite etwa 5 min. aufgelöst ist und nur mehr Zellulosefasern nachweisbar sind. Durch Zusatz des Tensids wird weiterhin die Gesamtfestigkeit des Papiers nicht beeinflusst, so dass die Eigenschaften des Sackpapiers jenen eines nicht wasserlöslichen ungebleichten Sackpapiers vergleichbar sind, ohne dass ein aufwendiges Aufarbei-tungsverfahren der Zellulosefasern zur Entfernung des Lignins, nämlich ein Bleichprozess durchgeführt werden muss, wodurch ein insbesondere ökonomisch herzustellendes Papier zur Verfügung gestellt werden kann. Schließlich werden für ein wasserlösliches, ungebleichtes Sackpapier gemäß der Erfindung als Zellulosefasern ungebleichte Weichholzfasern eingesetzt. Weichholzfasern weisen üblicherweise im Vergleich zu aus Hartholz gewonnenen Zellulosefasern eine erhöhte Faserlänge auf, so dass durch das Verhaken der Fasern unter anderem eine höhere Festigkeit des Sackpapiers lediglich der Einsatz spezieller Fasern erzielt werden kann, ohne dass der Zusatz eines Trockenfestmittels erforderlich wäre bzw. nur äußerst geringe Mengen eines Trockenfestmittels eingesetzt werden müssen.

Indem das Sackpapier eine relative Nassfestigkeit nach einer Wässerungszeit von 5 min. von unter 6 % aufweist, gelingt es, das Sackpapier innerhalb kurzer Zeit nahezu vollständig aufzulösen, so dass ein derartiges Sackpapier beispielsweise rückstandsfrei gemeinsam mit darin enthaltenen Baustoffen, wie z.B. Zement in beispielsweise einen Betonmischer eingebracht werden kann und einem Mischprozess unterworfen werden kann, wobei eine vollständig rückstandsfreie Verarbeitung von derartigem Sackpapier möglich wird, ohne dass z.B. der damit hergestellte Beton verschlechterte Eigenschaften aufweist.

Lediglich zum Vergleich wird festgehalten, dass bekannte, ebenfalls im Wesentlichen wasserlösliche Papiere, wie beispielsweise Toilettenpapier, welches aus Frischfasern hergestellt wird, eine Nassfestigkeit nach einer Wässerungszeit von 5 min. von etwa 8 % aufweisen, woraus sich ergibt, dass das Papier gemäß der vorliegenden Erfindung besonders rasch und vollständig auflösbar ist.

Gemäß einer Weiterbildung der Erfindung ist das Sackpapier so ausgeführt, dass zwischen 0,1 % und 2 % Tensid enthalten sind. Die Menge an Tensid ist hierbei insbesondere so gewählt, dass einerseits die Oberflächenspannung nicht zu weit herabgesetzt wird, um eine unbeschränkte und momentane Wasseraufnahme des Papiers hintanzuhalten. Eine zu rasche und zu vollständige Wasseraufnahmefähigkeit von Papier hat den Nachteil, dass beispielsweise ein derartiges Packpapier nicht bedruckbar wäre, was insbesondere für Papier im Industrieeinsatz bzw. Säcke im Industrieeinsatz nachteilig ist, da z.B. in der Baustoffindustrie der Inhalt des Sacks üblicherweise unmittelbar auf denselben aufgedruckt ist. Wenn nun die Wasseraufnahme zu hoch ist, sind derartige Papiere für den üblicherweise für das Bedrucken von Sackpapieren eingesetzten Flexodruck zu stark wasserziehend und das Papier wird entweder überhaupt nicht bedruckbar oder der Druck verläuft bzw. blutet aus, was ein derartiges Papier für den industriellen Einsatz unwünschenswert macht.

Gemäß einer Weiterbildung der Erfindung ist der Hilfsstoff des Sackpapiers so gewählt, dass das wenigstens eine Tensid aus der Gruppe nichtionische, anionische, kationische oder amphotere Tenside, Fettalkohole, Fettalkoholpolyglycolether, Fettalkoholsulfate, Fettalkoholethersulfate, Methylethersulfate, Fettalkoholethoxylate oder Phenolethoxylate darstellt. Welche Art eines Tensids für den speziellen Einsatzzweck gewählt wird, hat sich hierbei als wenig kritisch herausgestellt und ist in Übereinstimmung mit dem Ligningehalt der verwendeten Zellulosefasern, der Holzart, aus welchen die Zellulosefasern stammen, der Oberflächenspannung des Sackpapiers und der dgl. auszuwählen, so dass prinzipiell jedes aus der Gruppe der ionischen oder nicht ionischen, anionischen, kationischen oder amphoteren Tenside aber auch der Fettalkohole, Fettalkoholpolyglycolether, Fettalkoholsulfate, Fettalkoholethersulfate, Methylethersulfate, Fettalkoholethoxylate oder Phenolethoxylate gewählt sein kann.

Ein erfindungsgemäßes Papier weist hierbei eine Saugfähigkeit entsprechend einem K-Wert von größer 5000 auf.

Der K-Wert ist hierbei ein Maß für die Eindringgeschwindigkeit von Wasser in Papier und somit für die Saugfähigkeit des Papiers. Er wird üblicherweise mittels Ultraschalltransmission gemessen. Bei einer derartigen Messung sind der Ultraschallsender und der Ultraschallempfänger in einer Messzelle derart angeordnet, dass die zu prüfende Papierprobe auf direktem Weg von der Schallwelle durchstrahlt wird. Bei einer Messung wird am Sender eine Ultraschallwelle mit konstanter Frequenz und Intensität erzeugt. Durch die Wechselwirkung der Papierprobe mit dem Umgebungsmedium, nämlich Wasser ändert sich die Ultraschallintensität am Empfänger und diese wird in einem Transmissions-Zeit-Diagramm dargestellt. Der ermittelte K-Wert gibt dann an, welche Steigung der Kurvenverlauf zum Zeitpunkt der größten Eindringgeschwindigkeit aufweist. Das Messverfahren, welches hier angewandt wird, ist das Messverfahren gemäß dem Emco Penetrationstester DPM 27.

Zur Erhöhung der Festigkeit des Sackpapiers kann gemäß der Erfindung so vorgegangen werden, dass weiterhin ein Trockenfestmittel enthalten ist. Als Trockenfestmittel werden gemäß der vorliegenden Erfindung Stärken wie kationische Kartoffelstärke, Maisstärke, Tapiokastärke eingesetzt. Durch Zusatz von Trockenfestmitteln verbessert sich die Bedruckbarkeit des Papiers.

Gemäß einer Weiterbildung der Erfindung werden die Zellulosefasern aus Weichholzfasern von Nadelhölzern, insbesondere von Fasern von Fichtenholz und/oder Kiefernholz gewählt.

Zur Einstellung der gewünschten Festigkeit wird, wie dies einer Weiterbildung der Erfindung entspricht, so vorgegangen, dass die Weichholzfasern als hochkonsistenz-gemahlene (HC-gemahlene) und/oder niederkonsistenz-gemahlene (LC-gemahlene) Weichholzfasern eingesetzt sind. Je nach eingesetzter Mahlung wird die Faserlänge des eingesetzten Zellstoffs mehr oder weniger vergrößert und dadurch die Festigkeit des damit hergestellten Papiers beeinflusst. Gemäß der vorliegenden Erfindung können sowohl ausschließlich hochkonsistenz-gemahlene als auch ausschließlich niederkonsistenz-gemahlene Weichholzfasern oder auch Mischungen davon verwendet werden.

Zur Erzielung eines stabilen und insbesondere im trockenen Zustand ausreichend festen Sackpapiers ist der durchgenässte Sack so ausgebildet, dass er ein Längs/Querverhältnis der Zugfestigkeit zwischen 1 und 1,8, insbesondere 1,3 liegt. Sackpapiere werden auf einer sogenannten "Clupack-Anlage" hergestellt, mit welcher es gelingt, Papiere herzustellen, die nahezu gleiche Zugfestigkeitseigenschaften in sowohl Längs- als auch in Querrichtung aufweisen. Je gleichmäßiger die Zugfestigkeitseigenschaften in Längs- und Querrichtung sind, desto stabiler und geeigneter ist ein derartig hergestelltes Papier für den Praxiseinsatz, in welchem beispielsweise in einem derartigen Sack bis zu 50 kg Zement oder mehr eingefüllt werden und welcher Sack während oder nach der Befüllung keinesfalls reißen darf. Mit einem wasserlöslichen, ungebleichten Sackpapier gemäß der Erfindung gelingt es, ein Längs/Querverhältnis zwischen 1 und 1,8, insbesondere 1,3 zu erreichen.

Um insbesondere ein gutes Längs/Querverhältnis zu erreichen und Sackpapier herzustellen, welches exzellente Festigkeitseigenschaften bzw. gleichzeitiger Wasserlöslichkeit aufweist, wird gemäß der vorliegenden Erfindung so vorgegangen, dass das die Zellulosefasern als getrockneter, insbesondere flockengetrockneter Zellstoff enthalten sind.

Die vorliegende Erfindung bezieht sich auch auf einen Papiersack, der aus den wasserlöslichen, ungebleichten Sackpapieren gemäß der Erfindung hergestellt ist. Ein derartiger Sack ist im Wesentlichen dadurch gekennzeichnet, dass das Sackpapier mit einem Kleber, insbesondere einem Maltodextrinkleber verklebt ist. Maltodextrinkleber sind ebenso wie das Papier selbst wasserlöslich, so dass es möglich ist, einen befüllten Sack gemäß der Erfindung unmittelbar beispielsweise in eine Betonmischmaschine gemeinsam mit dem darin enthaltenen Zement bzw. Mörtel eingebracht werden kann, rückstandslos bzw. lediglich unter Zurücklassung von statistisch fein verteilten Zellulosefasern in den herzustellenden Baustoff eingebracht werden.

Zur Erzielung von größerer Festigkeit und insbesondere für Säcke mit schwerem Inhalt bzw. besonders groß dimensionierte Säcke ist der Papiersack gemäß der Erfindung derart weitergebildet, dass er aus mehrlagigem Sackpapier besteht.

Für das Erzielen von Barriereeigenschaften kann der Papiersack dahingehend weitergebildet sind, dass zusätzlich eine Schicht aus wasserlöslichem Polymeren, wie Polyvinylalkohol oder Polyether auf wenigstens eine Papierlage aufgebracht ist.

Die Erfindung wird nachfolgend anhand von Ausführungsbeispielen näher erläutert.

### Beispiel 1

Aus einem wasserlöslichen, ungebleichten Sackpapier gemäß der Erfindung werden Mustersäcke hergestellt und diese mit Zement befüllt. Die mit Zement befüll- ten Säcke werden verschlossen und unmittelbar in einem Betonmischer eingesetzt und für 5 min. bzw. 10 min. dem üblichen Zementmischvorgang unterworfen, worauf das Ergebnis überprüft wird.

Eingesetztes Sackpapier: nicht gebleichtes, wasserlösliches Sackkraftpapier mit einem Basisgewicht gemäß ISO 536 von 70 g/m².

Die in dem Sackpapier eingesetzten Zellulosefasern sind lange Fasern aus Fichtenholz, welches einer Oxidationsbehandlung unterworfen wurde. Das Papier enthält kein Lämungsmittel, dafür waren 0,3 Gew.-% Polyalkylenglycolethers *(Fettal-koholalkoxylat)* mit einem MW von 588 g/mol als nicht ionisches Tensid enthalten. Die Zugfestigkeit des Papiers in Maschinenrichtung betrug gemäß ISO 1924-3 5,7 kN/m² und in Querrichtung der Maschinenlaufrichtung 4,2 kN/m², was einem Zugfestigkeitsindex von 1,36 entsprach. Aus diesem Basispapier wurden 3 unterschiedliche Zementsäcke hergestellt, wobei die Verklebung der Säcke mittels eines Maltodextrinklebers erfolgte. Der erste Zementsack bestand aus zwei Lagen des oben definierten, ungebleichten Kraftpapiers gemäß der Erfindung ohne Zwischenlage, der zweite Zementsack wies eine Lage aus ungebleichtem Kraftpapier gemäß der Erfindung auf und eine zweite Lage aus ungebleichtem Kraftpapier, welchem eine Beschichtung aus Polyvinylalkohol aufwies. Die Beschichtung war 30 µm dick. Der dritte hergestellte Zementsack bestand aus einer ersten Schicht aus ungebleichtem, ungeleimtem, wasserlöslichem Kraftpapier gemäß der Erfindung, einer freiliegenden PVA-Schicht mit 38 µm Dicke und einer zweiten Schicht aus ungeleimtem, ungebleichtem Kraftpapier gemäß der Erfindung. Sämtliche Papierschichten in allen drei Zementsäcken hatten ein Basisgewicht von 70 g/m².

Die Säcke wurden in Bezug auf nicht aufgelöste Papierstücke in dem Betonmischer nach 5 min. Mischzeit bzw. 10 min. Mischzeit untersucht, wobei sich bei Sack 1 herausgestellt hat, dass am Ende von 5 min. nur mehr sehr kleine Papierstücke auf einem Sieb sichtbar sind, welche sich auch nach 10 min. kaum verringerten.

Bei Sack 2 können nach 5 min. noch eine Mehrzahl von kleinen Papierstücken gesehen werden, welche nach 10 min. deutlich weniger sind.

Bei Sack 3 ist nach 5 min. noch eine Vielzahl von kleinen Papierstücken sichtbar, wobei auch nach 10 min. noch viele Papierstücke sichtbar sind.

Es ist somit festzuhalten, dass ein Papiersack, welcher aus ungeleimtem, ungebleichtem Sackpapier gemäß der Erfindung hergestellt ist und welcher Papiersack keinerlei zusätzliche Beschichtung aufweist, innerhalb von 5 min. nahezu vollständig aufgelöst werden kann. Die Papiersäcke 1 bis 3 wurden in der Folge mit Zement befüllt und einer Mehrzahl von Handhabungsoperationen unterworfen, wie raschem Befüllen, Verschließen, Stapeln, Transportieren, d.h. Rütteln, zu Boden werfen und dgl., wobei sich als Ergebnis herausgestellt hat, dass Papiersack 2 einem Herunterwerfen aus 1 m Höhe standhalten kann. Papiersack 1 war bei sämtlichen Handhabungstätigkeiten stabil, platze jedoch bei einem Herunterwerfen aus 1 m Höhe. Einem Herunterwerfen aus ½ m Höhe hielt Papiersack 1 Stand.

Die Eigenschaften von Papiersack 3 waren vergleichbar mit jenen von Papiersack 1.

## Patentansprüche

1. Wasserlösliches, ungebleichtes Sackpapier bestehend aus Lignine enthaltenden Zellulosefasern als Hauptbestandteil sowie einem oder mehreren Hilfsstoff(en), **dadurch gekennzeichnet, dass** als Hilfsstoff wenigstens ein Tensid enthalten ist, dass die Zellulosefasern als oxidativ behandelte, ungebleichte Weichholzfasern eingesetzt sind und dass das Sackpapier eine relative Nassfestigkeit nach einer Wässerungszeit von 5 min. von unter 6 % aufweist.

2. Sackpapier nach Anspruch 1, **dadurch gekennzeichnet, dass** zwischen 0,1 % und 2 % Tensid enthalten sind.

3. Sackpapier nach Anspruch 1 oder 2, **dadurch gekennzeichnet, dass** das wenigstens eine Tensid aus der Gruppe nichtionische, anionische, kationische oder amphotere Tenside, Fettalkohole, Fettalkoholpolyglycolether, Fettalkoholsulfate, Fettalkoholethersulfate, Methylethersulfate, Fettalkoholethoxylate oder Phenolethoxylate gewählt ist.

4. Sackpapier nach Anspruch 1, 2 oder 3, **dadurch gekennzeichnet, dass** zusätzlich ein Trockenfestmittel enthalten ist.

5. Sackpapier nach einem der Ansprüche 1 bis 4, **dadurch gekennzeichnet, dass** das Trockenfestmittel aus Stärke, wie kationische Kartoffelstärke, Maisstärke, Tapiokastärke gewählt ist.

6. Sackpapier nach einem der Ansprüche 1 bis 5, **dadurch gekennzeichnet, dass** die Zellulosefasern aus Weichholzfasern von Nadelhölzern, insbesondere Fasern von Fichtenholz und/oder Kiefernholz gewählt sind.

7. Sackpapier nach einem der Ansprüche 1 bis 6, **dadurch gekennzeichnet, dass** die Weichholzfasern als hochkonsistenz-gemahlene (HC-gemahlene) und/oder niederkonsistenz-gemahlene (LC-gemahlene) Weichholzfasern eingesetzt sind.

8. Sackpapier nach einem der Ansprüche 1 bis 7, **dadurch gekennzeichnet, dass** die Zellulosefasern als getrocknete, insbesondere flockengetrockneter Zellstoff enthalten sind.

9. Papiersack bestehend aus wasserlöslichem, ungebleichtem Sackpapier nach einem der Ansprüche 1 bis 8, **dadurch gekennzeichnet, dass** das Sackpapier mit einem Kleber, insbesondere Maltodextrinkleber verklebt ist.

10. Papiersack nach Anspruch 9, **dadurch gekennzeichnet, dass** er aus mehrlagigem Sackpapier besteht.

11. Papiersack nach Anspruch 9 oder 10, **dadurch gekennzeichnet, dass** zusätzlich eine Schicht aus wasserlöslichen Polymeren, wie PVA oder PE auf wenigstens eine Papierlage aufgebracht ist.

## Claims

1. A water-soluble unbleached bag paper comprising lignincontaining cellulose fibers as main component and one or more additive(s), **characterized in that** at least one surfactant is contained as said additive, that the cellulose fibers are used as oxidatively treated unbleached softwood fibers, and that the bag paper has a relative wet strength of less than 6 % after a 5-minute wetting time.

2. A bag paper according to claim 1, **characterized in that** between 0.1% and 2% surfactant is contained.

3. A bag paper according to claim 1 or 2, **characterized in that** the at least one surfactant is selected from the group of non-ionic, anionic, cationic or amphoteric surfactants, fatty alcohols, fatty alcohol polyglycol ethers, fatty alcohol sulfates, fatty alcohol ether sulfates, methyl ether sulfates, fatty alcohol ethoxylates or phenol ethoxylates.

4. A bag paper according to claim 1, 2 or 3, **characterized in that** a dry-strength agent is additionally contained.

5. A bag paper according to any of claims 1 to 4, **characterized in that** the dry-strength agent is selected from starches like cationic potato starch, corn starch, tapioca starch.

6. A bag paper according to any one of claims 1 to 5, **characterized in that** the cellulose fibers are selected from softwood fibers from conifers, in particular fibers from spruce wood and/or pinewood.

7. A bag paper according to any one of claims 1 to 6, **characterized in that** the softwood fibers are used as high-consistency-beaten (HC-beaten) and/or low-consistency-beaten (LC-beaten) softwood fibers.

8. A bag paper according to any one of claims 1 to 7, **characterized in that** the cellulose fibers are contained as dried, in particular flake-dried, pulp.

9. A paper bag comprised of the water-soluble unbleached bag paper according to any one of claims 1 to 8, **characterized in that** the bag paper is glued with an adhesive, in particular a maltodextrin adhesive.

10. A paper bag according to claim 9, **characterized in that** it is comprised of a multi-ply bag papier

11. A paper bag according to claim 9 or 10, **characterized in that** a layer of water-soluble polymers such as PVA or PE is additionally applied on at least one paper ply.

## Revendications

1. Papier pour sacs non blanchi, soluble dans l'eau, consistant en fibres de cellulose contenant des lignines comme composant principal et un ou plusieurs excipient(s), **caractérisé en ce qu'**est contenu comme excipient au moins un tensioactif, **en ce que** les fibres de cellulose sont utilisées comme fibres de bois résineux non blanchies, traitées de façon oxydative et **en ce que** le papier pour sacs présente une résistance à l'état humide après un temps de mouillage de 5 min de moins de 6 %.

2. Papier pour sacs selon la revendication 1, **caractérisé en ce que** sont contenus entre 0,1 % et 2 % de tensioactifs.

3. Papier pour sacs selon la revendication 1 ou 2, **caractérisé en ce que** l'au moins un tensioactif est choisi dans le groupe des tensioactifs non ioniques, anioniques, cationiques ou amphotères, des alcools gras, des polyglycol-éthers d'alcool gras, des sulfates d'alcool gras, des éthersulfates d'alcool gras, des méthyléthersulfates, des éthoxylaes d'alcool gras ou des phénoléthoxylates.

4. Papier pour sacs selon la revendication 1, 2 ou 3, **caractérisé en ce qu'**en outre, un agent de résistance à sec est contenu.

5. Papier pour sacs selon l'une des revendications 1 à 4, **caractérisé en ce que** l'agent de résistance à sec est choisi parmi l'amidon, tel que la fécule de pomme de terre cationique, l'amidon de maïs, la fécule de manioc.

6. Papier pour sacs selon l'une des revendications 1 à 5, **caractérisé en ce que** les fibres de cellulose sont choisies parmi les fibres de bois résineux de conifères, en particulier les fibres de bois de sapin et/ou de pin.

7. Papier pour sacs selon l'une des revendications 1 à 6, **caractérisé en ce que** les fibres de bois résineux sont utilisées comme des fibres de bois résineux broyées à haute consistance (broyées HC) et/ou broyées à faible consistance (broyées LC).

8. Papier pour sacs selon l'une des revendications 1 à 7, **caractérisé en ce que** les fibres de cellulose sont contenues en tant que pâte de cellulose séchée, en particulier séchée en flocons.

9. Sac en papier consistant en papier pour sacs non blanchi, soluble dans l'eau selon l'une des revendications 1 à 8, **caractérisé en ce que** le papier pour sacs est collé avec un adhésif, en particulier un adhésif de maltodextrine.

10. Sac en papier selon la revendication 9, **caractérisé en ce qu'**il consiste en un papier pour sacs à plusieurs couches.

11. Sac en papier selon la revendication 9 ou 10, **caractérisé en ce qu'**en outre, une couche de polymères solubles dans l'eau, tels que le PVA ou le PE, est appliquée sur au moins une couche de papier.
